Europäisches Patentamt

(19) European Patent Office

Office européen des brevets

(11) Numéro de publication: **0 057 667**
**B1**

(12) **FASCICULE DE BREVET EUROPEEN**

(45) Date de publication du fascicule du brevet:
**11.09.85**

(21) Numéro de dépôt: **82810033.9**

(22) Date de dépôt: **26.01.82**

(51) Int. Cl.⁴: **G 01 N 21/43**

(54) **Dispositif pour déterminer l'indice de réfraction d'un fluide ramené à une température de réference.**

(30) Priorité: **30.01.81  CH 611/81**

(43) Date de publication de la demande:
**11.08.82 Bulletin 82/32**

(45) Mention de la délivrance du brevet:
**11.09.85 Bulletin 85/37**

(84) Etats contractants désignés:
**AT BE CH DE FR GB IT LI LU NL SE**

(56) Documents cités:
**EP - A - 0 000 319**
**US - A - 3 751 672**

(73) Titulaire: **BATTELLE MEMORIAL INSTITUTE, 7 route de Drize, CH-1227 Carouge/Genève (CH)**

(72) Inventeur: **Harmer, Alan L., Bernex en Combes, CH-1233 Bernex (CH)**

(74) Mandataire: **Dousse, Blasco et al, 7, route de Drize, CH-1227 Carouge/Genève (CH)**

## Description

L'invention se rapporte à un dispositif pour déterminer l'indice de réfraction d'un fluide ramené à une température de référence de manière à rendre la mesure indépendante des variations de cet indice consécutives aux variations de température, pour permettre une comparaison des indices mesurés.

On connaît des réfractomètres pour déterminer l'indice de réfraction de fluides, basés sur l'exploitation des phénomènes de réflexion et de réfraction se produisant de part et d'autre d'un angle critique, dont la valeur varie en fonction de l'indice de réfraction du fluide. Les réfractomètres à immersion, basés sur ce principe, sont des instruments simples et précis. Ils comprennent généralement une sonde optique à structure conductrice de la lumière par réflexions internes entre une entrée et une sortie, plongée dans un liquide dont on désire mesurer l'indice de réfraction. Suivant la valeur de cet indice, un passage plus ou moins important de lumière se produit par réfraction entre la structure conductrice et ce liquide, la quantité de lumière transmise à travers cette structure servant à déterminer cet indice de réfraction.

L'indice de réfraction mesuré avec une telle sonde est l'indice de réfraction réel du liquide qui est fonction de deux paramètres, à savoir l'indice du liquide, dépendant de ses propriétés physiques propres d'une part et l'indice du liquide dépendant de sa température. Bien entendu, cet indice de réfraction réel n'est exploitable que dans la mesure où la température est connue. Dans ce cas, on peut déduire la part de l'indice de réfraction due aux propriétés physiques et celle due à la température.

Etant donné que pour se rendre indépendant des variations d'indice dues aux variations de température, il faudrait qu'un tel réfractomètre soit équipé d'une sonde dont l'indice de réfraction présente un même coefficient en température que celui du liquide à mesurer, mais qu'un tel matériau n'existe pas, il a été proposé de corriger la valeur mesurée pour la ramener à la valeur de l'indice de réfraction, pour une température de référence, en mesurant séparément la température et en effectuant la correction en fonction du coefficient en température de l'indice de réfraction du liquide. En pratique, une telle correction ne peut être effectuée qu'à l'aide d'un circuit électronique relativement complexe, ce qui conduit à un appareil de mesure dont le prix est réservé à des applications de type industriel. C'est ainsi que le coût d'un tel appareil n'est pas adapté pour mesurer par exemple l'indice de réfraction de l'électrolyte d'un accumulateur acide-plomb d'une voiture notamment pour en déduire l'état de charge de cet accumulateur.

Il a déjà été proposé d'utiliser une diode électroluminescente en tant que source de lumière d'un réfractomètre comme décrit dans les US-A-3 751 672. Une telle source en elle-même ne permet pas de corriger l'effet des variations de température.

Le but de la présente invention est de remédier, au moins partiellement, aux inconvénients susmentionnés en proposant une structure simple, capable de mesurer avec une bonne précision l'indice de réfraction d'un liquide pour une température de référence déterminée.

A cet effet, cette invention a pour objet un dispositif pour déterminer l'indice de réfraction d'un fluide ramené sensiblement à une température de référence, selon la revendication 1.

L'avantage du dispositif selon l'invention réside dans le fait qu'il ne nécessite aucun organe de correction. La mise en œuvre de cette invention ne dépend que du choix d'une source lumineuse capable d'émettre une quantité de lumière variant avec la température selon une fonction inverse du coefficient en température de l'indice de réfraction du liquide. Il en résulte que la quantité de lumière mesurée à la sortie de la sonde ne dépend essentiellement que des variations d'indice de réfraction, causées par les propriétés physiques du liquide, indépendemment des variations de ce même indice par rapport à une température de référence. En outre, par sa simplicité, un tel dispositif est d'un faible prix de revient et d'une grande fiabilité. Il se prête de ce fait tout particulièrement à la production en série d'appareils de mesure de grande consommation et dont la précision est cependant remarquable. Bien entendu ces avantages peuvent également être mis à profit pour réaliser des appareils de mesure industriels.

Le dessin annexé illustre, schématiquement et à titre d'exemple une forme d'exécution du dispositif objet de la présente invention.

La fig. 1 est une vue en coupe longitudinale de ce dispositif.

La fig. 2 est un diagramme illustrant le rapport entre l'indice de réfraction du liquide et la variation de courant consécutive à la variation de lumière transmise.

La fig. 3 est un diagramme illustrant la dépendance en température de l'intensité lumineuse émise par une diode électroluminescente couplée à une fibre optique.

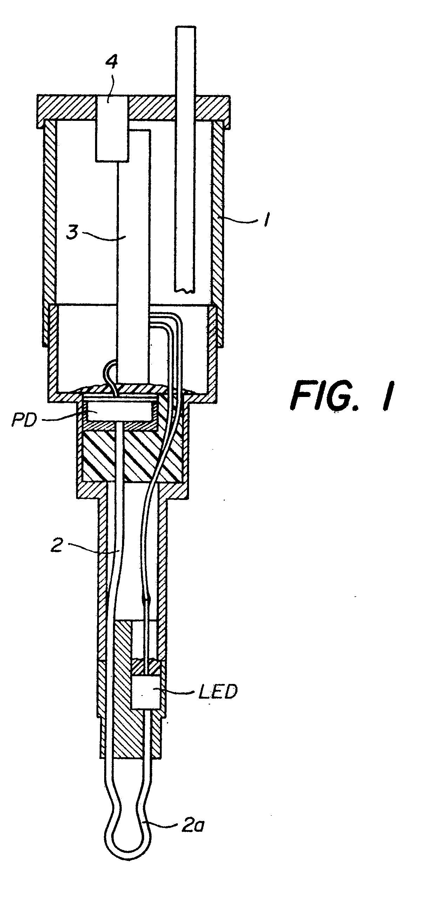

La fig. 1 représente la sonde servant à mesurer l'indice de réfraction ramené à une température de référence. Cette sonde comporte un boîtier étanche 1 qui renferme une fibre optique 2 dont une portion 2a fait saillie hors du boîtier étanche 1 et est conformée pour présenter des courbures alternées comme décrit dans le brevet EP-A-0 000 319 afin qu'une fraction de la lumière parcourant la fibre sorte de celle-ci, suivant l'indice de réfraction du milieu entourant cette portion 2a. Une extrémité de cette fibre 2 est associée à une diode électroluminescente LED et constitue l'extrémité d'entrée de cette fibre, tandis que l'autre extrémité, constituant alors l'extrémité de sortie, est associée à une photodiode PD. Comme on le remarque, l'extrémité d'entrée de la fibre est proche de la portion 2a destinée à être plongée dans un liquide dont on désire mesurer l'indice de réfraction, de manière que cette diode électroluminescente soit portée à la même température que celle du liquide à mesurer. La fixation de la fibre optique 2 et l'étanchéité des ouvertures du boîtier 1 permettant à cette fibre de communiquer avec l'extérieur de ce boîtier, sont réalisés à l'aide d'une résine époxy.

La diode électroluminescente LED et la photodiode PD sont reliées à un circuit électronique 3 que l'on ne décrira pas ici dans la mesure où il n'est pas nécessaire à la compréhension de l'invention. Ce circuit est muni d'une borne de connexion 4, destinée à le relier au dispositif d'affichage (non représenté).

Pour effectuer une mesure de l'indice de réfraction du liquide indépendamment des variations de température de ce liquide, il faut que la lumière émise par la diode électroluminescente LED compense, par une diminution d'intensité de lumière lorsque la température du liquide croît, la diminution correspondante de l'indice de réfraction du liquide. En effet, on sait que l'indice de réfraction de la quasi totalité des liquides décroît lorsque la température augmente selon un coefficient en température $dn/dT$ d'environ $-2 \times 10^{-4}/°C$ à $-6 \times 10^{-4}/°C$ mesuré avec une fibre dont le coefficient en température est lui-même négligeable, telle qu'une fibre de verre. De ce fait, l'intensité lumineuse transmise à travers la fibre augmentera en conséquence, à moins d'être compensée par une diminution correspondante de la lumière émise par la diode LED. S'il est possible de faire varier cette lumière émise dans une proportion inversement correspondante au coefficient en température du liquide, on obtient alors une compensation intégrale. Comme on l'expliquera, il est possible de réduire l'erreur due au coefficient en température en combinant d'une part, la compensation provenant de la diode LED et d'autre part, de façon elle-même connue en choisissant un matériau autre que le verre pour la fibre optique 2 présentant lui-même un coefficient en température non négligeable, capable de se soustraire du coefficient en température du liquide, pour donner un coefficient effectif $dn/dT_{eff}$ inférieur au coefficient réel.

La puissance émise par la diode LED est une fonction exponentielle de la température.

$$I = I_0 \exp(-aT)$$

où $I$ = intensité lumineuse
a étant une première grandeur dont la valeur est liée à cette d'une seconde grandeur c selon une relation mentionnée ci-après.

La variation d'intensité lumineuse émise par la diode LED en fonction de la température est donc:

$$dI/dT = -a\,I \tag{1}$$

La variation d'intensité lumineuse de la sonde est donnée par:

$$\left(\frac{dI}{dT}\right) = \left(\frac{dn}{dT}\right)_{eff} \cdot \left(\frac{dI}{dn}\right)$$

où $(dI/dn)$ est la sensibilité de la sonde en fonction de l'indice de réfraction, et $(dn/dT)_{eff}$ est défini par l'équation:

$$\left(\frac{dn}{dT}\right)_{eff} = n_l \left[\frac{1}{n_l}\frac{dn_l}{dT} - \frac{1}{n_f}\frac{dn_f}{dT}\right] \tag{2}$$

où

$n_l$ = indice de réfraction du liquide à une température prédéterminée
$n_f$ = indice de réfraction de la fibre optique à une température prédéterminée

Si l'on tient compte de la caractéristique propre à la présence des courbures de sens alternés de la partie 2a de la sonde, on a:

$$I_s = I_e \exp(-cn)$$

c étant la seconde grandeur mentionnée ci-dessus, $I_e$ étant l'intensité de la lumière qui entre dans la sonde et $I_s$ étant l'intensité de la lumière qui sort de la sonde.

ainsi $dI_s/dn = -cI_s$

$$\text{Donc } dI_s/dI = c\left(\frac{dn}{dT}\right)_{eff} \cdot I_s \tag{3}$$

et en comparant les équations (1) et (3) on voit que les effets de température vont s'annuler si

3

$$a = -c \left(\frac{dn}{dT}\right)_{eff}$$

cette équation fixé la relation entre les première et seconde grandeur s, a, c.

Si les valeurs numériques des équations (1) et (3) sont les mêmes, il n'y aura pas de variation d'intensité lumineuse en fonction de la température.

## Exemple

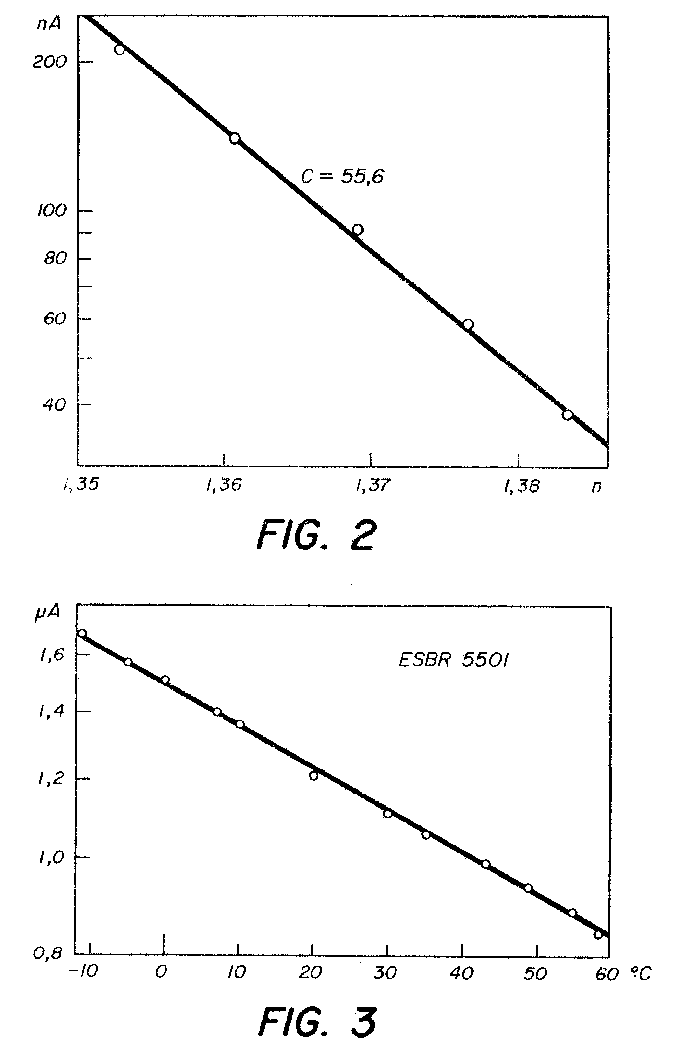

$a = 8 \times 10^{-3}/°C$ pour une diode électroluminescente en arsénure de gallium dopée à l'aluminium (Ga As: AL) ESBR 5501 fabriquée par Stanley Electric Co à Yokohama (Japon). $(dn/dT)_{eff} = -1,4 \times 10^{-4}/°C$ dans le cas d'une fibre en polystyrène dont le coefficient en température est de $-1,34 \times 10^{-4}/°C$ plongée dans l'électrolyte d'une batterie comprenant une solution de $H_2SO_4$ avec une densité de 1,25 dont le coefficient en température est de $-2,5 \times 10^{-4}/°C$ et calculé à l'aide de la formule (2). On peut alors déduire du diagramme de la fig. 2, qui montre le courant mesuré à la sortie de la fibre optique du type de celle de la fig. 1 en fonction d'indices de liquides différents mesurés à 20°C, que la grandeur c est:

c = 55,6/indice réfraction

$$\left(\frac{dn}{dT}\right)_{eff} = -1,4 \ 10^{-4}/°C$$

$$\therefore \ c \left(\frac{dn}{dT}\right)_{eff} = -7,8 \cdot 10^{-3}/°C$$

Le tableau ci-dessous représente les variations de courant enregistrées par le photodétecteur PD lorsque l'extrémité de la sonde et la diode électroluminescente LED du dispositif de la fig. 1 sont plongés dans une solution à indice de réfraction connu, à différentes températures.

Les variations relevées pour les différents indices mesurés sont les suivantes:

pour n = 1,3528; $\Delta i$ = 0,057 nA/°C.

Tableau

| Température des solutions (°C) | Courant PD (x10$^{-7}$ A) | | |
|---|---|---|---|
| | n = 1.3528 | n = 1.3690 | n = 1.3833 |
| − 9.3 | 2.16 | 0.845 | 0.365 |
| − 5.0 | 2.15 | 0.89 | 0,36 |
| 5.0 | 2.17 | 0.91 | 0.38 |
| 17.5 | 2.22 | 0.96 | 0.395 |
| 25.0 | 2.22 | 0.99 | 0.42 |
| 30.0 | 2.23 | 0.99 | 0.42 |
| 35.5 | 2.26 | 1.00 | 0.425 |
| 40.0 | 2.22 | 0.99 | 0.425 |
| 45.0 | 2.20 | 1.00 | 0.42 |
| 50.0 | 2.20 | 1.00 | 0.43 |
| 60.0 | 2.18 | 1.00 | 0.45 |

Pour n = 1,3690;  $\Delta$i = 0,22 nA/°C.
Pour n = 1,3833;  $\Delta$i = 0,12 nA/°C.

Ces résultats montrent une stabilité excellente de la sonde entre −10°C et +60°C quel que soit l'indice du liquide.

Comparativement si, selon la fig. 2 à 20°C.

n = 1,3528 donne i = 2,18 nA

à 30°C selon la formule (dn/dT)$_{eff}$

$\Delta$n = 0,0014 donc n = 1,342 ce qui donne

i = 202 nA

soit un $\Delta$i = 1,6 nA/°C comparé au $\Delta$i = 0,057 nA/°C.

La littérature montre que d'autres types de diodes électroluminescentes ont une puissance de sortie diminuant avec la température dans des proportions voisines du type de diode utilisé dans l'exemple précédent. C'est ainsi le cas notamment des diodes en phosphure de gallium dopées à l'oxyde de zinc GaP: ZnO ou des diodes à l'arsénure de gallium dopées au silicium GaAs: Si. Le taux de compensation, (sur ou sous compensation) peut également être ajusté en fonction du coefficient en température du matériau formant la fibre vis-à-vis du coefficient en température du liquide à mesurer de manière à adapter le coefficient effectif (dn/dT)$_{eff}$ en fonction du taux désiré. La gamme des associations fibres/diodes électroluminescentes en fonction du liquide à mesurer peut être assez étendue compte tenu des types de diodes électroluminescentes et des matériaux utilisés couramment pour la fabrication des fibres optiques.

L'intensité lumineuse reçue par le photodétecteur PD peut servir à afficher une valeur caractéristique de l'indice de réfraction mesuré, ramenée à une température de référence. C'est ainsi que, quel que soit l'indice réel de l'électrolyte d'une batterie de démarrage par exemple, il sera possible d'indiquer dans quel état de charge se trouve la batterie, celui-ci étant en relation directe avec la densité de l'électrolyte dont est fonction l'indice de réfraction et sans qu'aucune correction ne soit à introduire en fonction de la température. On voit qu'il suffit alors d'amplifier le signal apparaissant à la sortie de la photodiode pour obtenir une indication directement proportionnelle à l'état de charge réel de la batterie alors que cet état de charge n'est pas une fonction linéaire de l'indice de réfraction réel de l'électrolyte.

## Revendications

1. Dispositif pour déterminer l'indice de réfraction d'un fluide ramené sensiblement à une température de référence, comprenant une source de lumière (LED), une sonde optique constituée par un corps conducteur (2) de la lumière présentant une section d'entrée associée à la source de lumière (LED) et une section de sortie, raccordées l'une à l'autre par une section intermédiaire incurvée (2a), cette section intermédiaire (2a) au moins étant destinée à être immergée dans ledit fluide et étant adaptée pour transmettre la lumière issue de ladite source vers la section de sortie en modifiant la quantité de lumière transmise en fonction de l'indice de réfraction du fluide et un détecteur photoélectrique (PD) associé à ladite section de sortie pour élaborer un signal correspondant à l'intensité de lumière émergeant de ladite section de sortie, caractérisé par le fait que ladite source de lumière (LED) est destinée à venir en contact thermique avec le fluide dont on désire déterminer l'indice de réfraction, pour être portée à la même température que celle de ce fluide, et est constituée par une diode électroluminescente avec une fonction exponentielle de la température: $I = I_0 \exp(-aT)$
où $I$, $I_0$ sont les intensités émises par la diode à la température T et à la température T = 0 respectivement
et a est une première grandeur définie par l'expression

$$a = -c\left(\frac{dn}{dT}\right)_{eff}$$

dans laquelle

$$\left(\frac{dn}{dT}\right)_{eff} = n_l\left[\frac{1}{n_l}\frac{dn_l}{dT} - \frac{1}{n_f}\frac{dn_f}{dT}\right]$$

où

$n_l$ = indice de réfraction du liquide à une température prédéterminée

$n_f$ = indice de réfraction de la fibre optique à la même température prédéterminée

et c est une seconde grandeur definie par la fonction $I_s = I_e \exp(-cn)$ obtenue pour une série de liquides d'indice de réfraction différents mesurés à 20°C

où

$I_e$ = l'intensité de la lumière qui entre dans la sonde

$I_s$ = l'intensité de la lumière qui sort de la sonde

2. Dispositif selon la revendication 1, caractérisé par le fait que pour réduire encore sa sensibilité à la température, on associe à ladite source de lumière (LED) une fibre optique (2) constituée d'un matériau dont le coefficient en température est négatif.

## Patentansprüche

1. Einrichtung zur Bestimmung des im wesentlichen auf eine Referenztemperatur bezogenen Brechungsindexes einer Flüssigkeit, mit einer Lichtquelle (LED), einer optischen Sonde, die von einem Lichtleiter (2) gebildet wird, der einen mit der Lichtquelle (LED) verbundenen Eintrittsabschnitt und einen Austrittsabschnitt hat, die miteinander über einen gekrümmten Zwischenabschnitt (2a) verbunden sind, wobei wenigstens dieser Zwischenabschnitt (2a) bestimmt ist, in die Flüssigkeit getaucht zu werden, und geeignet ist, das aus der Quelle austretende Licht zum Austrittsabschnitt zu übertragen, indem die übertragene Lichtmenge in Funktion des Brechungsindexes der Flüssigkeit geändert wird, und mit einem photoelektrischen Detektor (PD), der mit dem Austrittsabschnitt verbunden ist, um ein Signal entsprechend der Intensität des aus dem Austrittsabschnitt austretenden Lichtes zu bilden, dadurch gekennzeichnet, daß die Lichtquelle (LED) dazu bestimmt ist, mit der Flüssigkeit in thermischen Kontakt zu treten, deren Brechungsindex man bestimmen will, um auf die gleiche Temperatur gebracht zu werden wie die Flüssigkeit, und durch eine Elektrolumineszenzdiode gebildet ist, die eine Exponentialfunktion der Temperatur hat: $I = I_0 \exp(-aT)$
wo $I$, $I_0$ die von der Diode bei der Temperatur T bzw. T = 0 abgegebenen Intensitäten sind und a eine erste Größe ist, die durch den Ausdruck

$$a = -c \left(\frac{dn}{dT}\right)_{eff}$$

gegeben ist, bei dem

$$\left(\frac{dn}{dT}\right)_{eff} = n_l \left[\frac{1}{n_l}\frac{dn_l}{dT} - \frac{1}{n_f}\frac{dn_f}{dT}\right]$$

wo

$n_l$ = Brechungsindex der Flüssigkeit bei einer vorgegebenen Temperatur

$n_{ef}$ = Brechungsindex der optischen Faser bei der gleichen vorgegebenen Temperatur und

c eine zweite Größe gemäß der Funktion $I_s = I_e \exp(-cn)$ ist, die man für eine Reihe von Flüssigkeiten mit verschiedenen bei 20°C gemessenen Brechungsindices erhält,

wo

$I_e$ = Intensität des Lichtes, das in die Sonde eintritt

$I_s$ = Intensität des Lichtes, das aus der Sonde austritt.

2. Einrichtung nach Anspruch 1, dadurch gekennzeichnet, daß um ihre Temperaturempfindlichkeit noch mehr zu verringern, man die Lichtquelle (LED) mit einer optischen Faser (2) verbindet, die aus einem Material besteht, dessen Temperaturkoeffizient negativ ist.

## Claims

1. Device for determining the refractive index of a fluid after making substantial adjustments with respect to a reference temperature, comprising a light source (LED), an optical probe constituted by a light conductive body (2) having an input section coupled with the light source (LED) and an output section, both connected to each other by an intermediate arcuated section (2a), at least this intermediate section (2a) being gauged for being immersed in said fluid and adapted to transmit the light from said source toward the output section while modifying the amount of transmitted light as a function of the refractive index of the fluid, and a photoelectric detector (PD) coupled to said output section to provide a signal corresponding to the intensity of light exiting from said output section, characterized in that said light source (LED) is adapted to be in thermal contact with said fluid whose refractive index must be determined and be brought to the same temperature as that of said fluid, said light source being constituted by an electroluminescent diode operating exponentially with temperature; i.e.

$I = I_0 \exp(-aT)$

where I and $I_0$ are the intensities provided by the diode at temperatures T and $T_0$, respectively and a is a first number defined by the expression

$$a = -c \left(\frac{dn}{dT}\right)_{eff}$$

in which

$$\left(\frac{dn}{dT}\right)_{eff} = n_l \left[\frac{1}{n_l} \frac{dn_l}{dT} - \frac{1}{n_f} \frac{dn_f}{dT}\right]$$

where $n_l$ is the refractive index of the liquid at a predetermined temperature,
$n_f$ is the refractive index of the optical fiber at the same predeterminded temperature,
and c is a second number defined by the function $I_s = I_e \exp(-cn)$ obtained for a series of liquids of different refractive indexes measured at 20° C,
where

$I_o$ = the intensity of light entering the probe,
$I_s$ = the intensity of light exiting from the probe.

2. Device according to claim 1, characterized in that said light source (LED) is coupled to an optical fiber (2) made of a material with a negative temperature factor for still reducing its temperature sensitivity dependence.

FIG. 1

**FIG. 2**

**FIG. 3**